# EUROPEAN PATENT SPECIFICATION

(11) **EP 2 241 526 B1**
(45) Date of publication and mention of the grant of the patent: **08.06.2016**
(21) Application number: 10159913.2
(22) Date of filing: 14.04.2010
(51) Int. Cl.: B65H 75/44, F16L 3/01, B65H 51/10, B65H 75/36

(54) **Unit for handling and gathering flexible hoses**
Einheit zur Handhabung und Aufspulung von Schläuchen
Dispositif pour la manipulation et l'enroulement de tuyaux

(30) Priority: 15.04.2009 IT BO20090237
(43) Date of publication of application: 20.10.2010
(73) Proprietor: C.A.V. S.r.l., 40060 Dozza, Frazione Toscanella (BO) (IT)
(72) Inventor: Lucia, Andrea, 40026, IMOLA BO (IT)
(74) Representative: Modiano, Micaela Nadia

(56) References cited:
- CH-A- 356 671
- DE-A1- 2 920 580
- DE-U1-202007 010 397
- GB-A- 2 418 653
- US-A- 5 139 751

## Description

The present invention relates to a unit for handling and gathering flexible hoses.

Currently, especially in industrial buildings and other structures for industrial use, suction systems for powders and other substances of various kinds, such as for example residues of machining, are widespread.

According to some embodiments, in these systems suction is entrusted to one or more flexible hoses, which are connected to the suction circuit and in some cases are even several tens of meters long.

In order to contain their space occupation, when they are not used, they are kept wound around drums which are typically arranged along the perimeter of the building, so as to prevent them from being a hindrance during the execution of other work activities of operators and allow, by traction, simple unwinding when necessary.

When their use is required, an operator unwinds them from the drum in order to move their suction port proximate to the point of use.

However, this solution is not free from drawbacks.

Although it is true that upon correct winding around the drum it is simple to unwind the hose, it is likewise true that correct winding requires considerable attention, in order to avoid causing the formation of a bulky and aesthetically unpleasant tangle, which moreover will make it awkward to perform the subsequent unwinding operation in preparation for use.

Moreover, the winding of the flexible hose around the drum inevitably causes a compression of the innermost portions: this compression compromises the effectiveness of the hose in the configuration in which it is only partially unwound, since the compressed portions reduce the passage area.

This compression of the internal portions is further increased by the traction force and by the partial vacuum that are generated during suction, accordingly reducing further the effectiveness of the device.

With reference therefore to the known solutions, it is necessary to unwind the entire hose in order to be able to utilize fully its suction effectiveness, with consequent inconvenience for the assigned operators, who are forced to pay particular attention to the winding and unwinding operations, which are further extended unnecessarily due to the need to unwind the hose for its entire length upon each use.

Document GB 2 418 653 A discloses a handling and gathering unit according to the preamble of claim 1. The device has a roller 11 that is spring biased in order to tension the cable 15 when this is pulled off and to retract the cable by a limited extent that is taught as only to eliminate cable slack.

A further document, US 5 139 751, discloses an apparatus for driving or thrusting a hose 36 into and along a conduit. The hose 36 is unwound from a reel 34 and driven by two cooperating tires 46, 48 positioned in opposite relation to each other above and below the hose 36 to impart thereto a thrust in a forward direction. The hose 36 is taught to be withdrawn/wound back/stored onto the reel 34 by actuated actuated motion of only the reel 34 itself.

Another document, DE 20 2007 010 397 U1, teaches a two roller 1,2 system that cooperate to squeeze flat a hose, so as to eliminate any air inside it for subsequent compact storing thereof.

The aim of the present invention is to solve them above-mentioned drawbacks, by providing a handling and gathering unit that in any condition simplifies the operations for winding and unwinding flexible hoses.

Within this aim, an object of the present invention is to provide a unit that allows effective use of the hoses even if they are only partially unwound.

Another object of the invention is to provide a unit that allows to wind the hoses in a practical and easy manner, avoiding the risk of creating bulky and aesthetically unpleasant tangles.

A further object of the invention is to provide a versatile unit that is capable of handling and gathering hoses of various sizes and shapes.

Another object of the invention is to provide a unit that allows high reliability in operation.

Another object of the invention is to provide a unit that can be obtained easily starting from commonly commercially available elements and materials.

Another object of the invention is to provide a unit that has low costs and is safe in application.

This aim and these and other objects which will become better apparent hereinafter are achieved by a unit for handling and gathering flexible hoses, according to the present invention, that has the features set forth in claim 1.

Further characteristics and advantages of the invention will become better apparent from the following detailed description of a preferred but not exclusive embodiment of the unit according to the invention, illustrated by way of non-limiting example in the accompanying drawings, wherein:

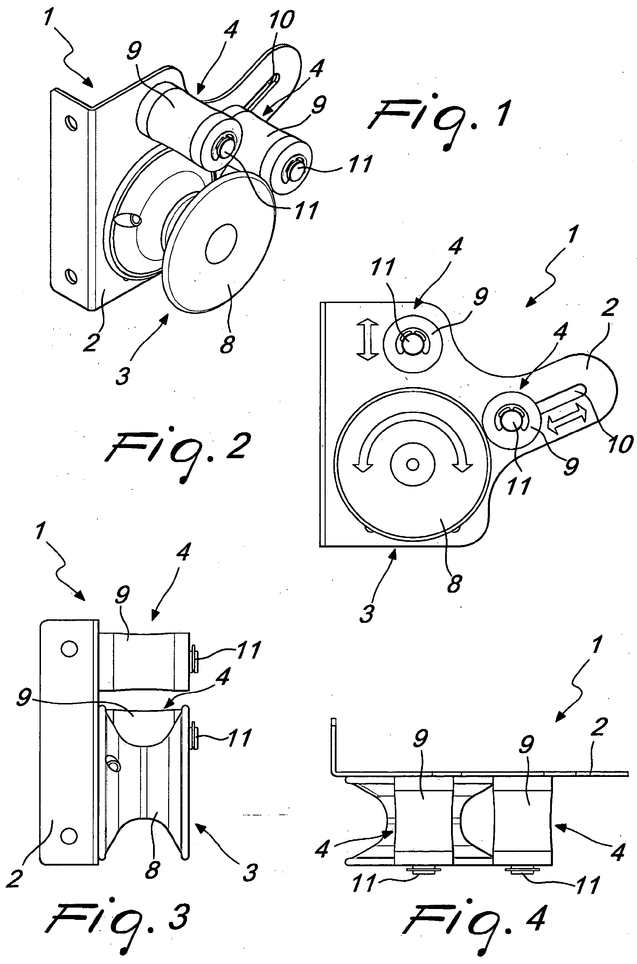

Figure 1 is a perspective view or a handling and gathering unit according to the invention;
Figure 2 is a front elevation view of the unit according to the invention;
Figure 3 is a side elevation view of the unit according to the invention;
Figure 4 is a top view of the unit according to the invention;
Figure 5 is a perspective view of the use of the unit according to the invention, installed on a suitable supporting structure, in a perspective view;
Figure 6 is a perspective view of the supporting structure of Figure 5.

With reference to the figures, a handling and gathering unit according to the invention, generally designated by the reference numeral 1, comprises a frame 2 (which is constituted for example by a bracket, as in the accompanying figures), which supports at least one rotating member 3.

In turn, the rotating member 3 faces and is proximate to at least one abutment element 4, so that the actuated rotation of the rotating member 3 causes, by friction, the sliding of at least one at least partially flexible hose 5, which is interposed between the rotating element 3 and the abutment element 4.

The unit 1 further comprises a receptacle 6 for the hose 5, which can be arranged proximate to the rotating member 3: such member can rotate in both directions in order to cause respectively the at least partial extraction of the hose 5 from the receptacle 6 and, vice versa, the reinsertion of the hose 5 in the receptacle 6.

The possibility to draw easily the hose 5 thanks to the presence of the rotating member 3 and of the abutment element 4 allows practical and easy handling of the hose 5, both during winding and during unwinding. The use of drums around which the hoses 5 are to be wound is therefore not required, and such hoses are instead stored, when not in use, in the receptacle 6, thus avoiding the formation of unsightly accumulations.

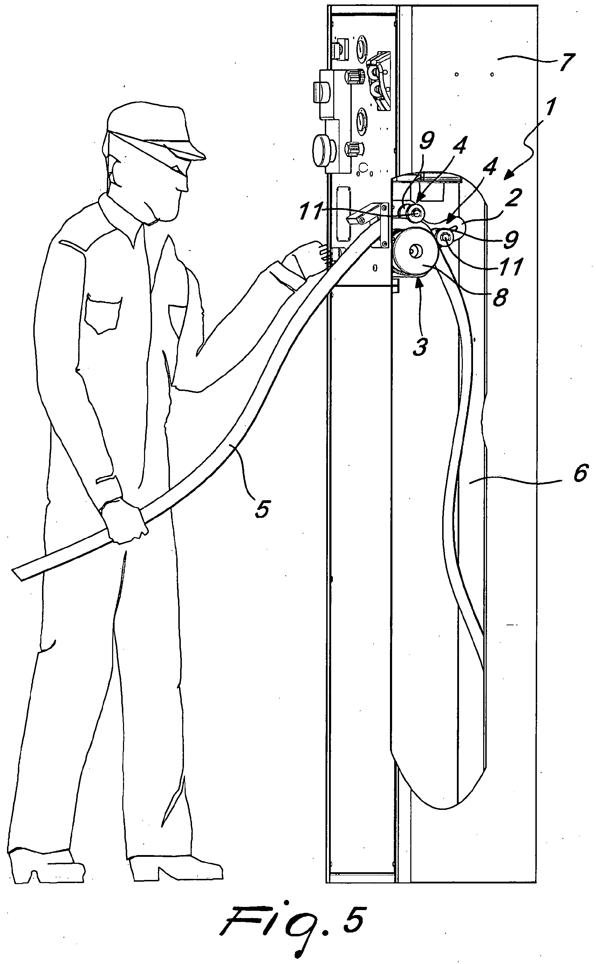

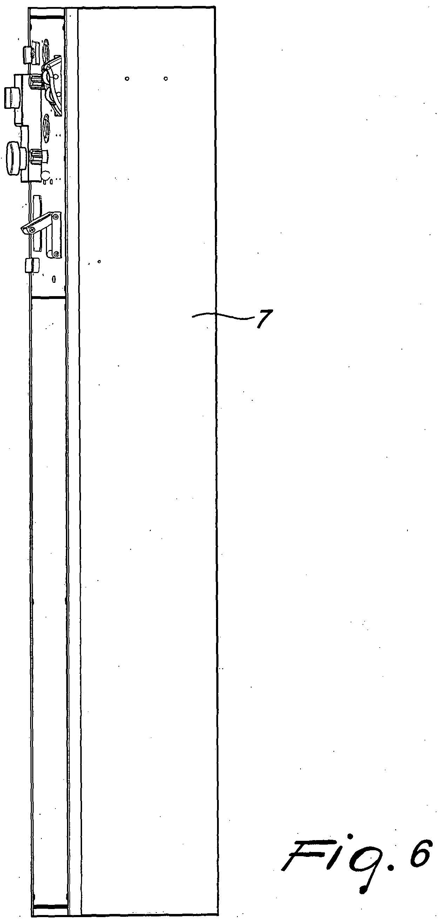

With reference to Figures 5 and 6, the receptacle 6 can be contained substantially in a casing 7, which in turn accommodates other complementary parts of the suction system to which the hose 5 is connected and to which the bracket that supports the rotating member 3 is fixed.

According to an embodiment of substantial practical interest, which is shown in the accompanying figures by way of non-limiting example of the application of the invention, the rotating member 3 is constituted substantially by a pulley 8, whose lateral surface is contoured conveniently to receive the side wall of the hose 5.

Conveniently, the abutment element 4 is constituted substantially by a roller 9, which also rotates about an axis which is parallel to the axis of the pulley 8; the roller 9 is adapted to clamp the side wall of the hose 5 on the opposite side with respect to the pulley 8.

More particularly, the unit 1 according to the invention comprises at least two rollers 9, each of which is adapted to clamp, in distinct points, the side wall of the hose 5 on the opposite side with respect to the pulley 8. The accompanying figures show an embodiment which indeed uses two rollers 9, but the possibility is not excluded to resort to a larger number thereof and to provide other pulleys 8 (or other types of rotating member 3 and of abutment element 4).

The choice to resort to a larger number of abutment elements 4 (and optionally of rotating members 3) allows to increase the contact surfaces and therefore to ensure correct traction of the hose 5 by friction. Further, it is thus possible to control precisely the unwinding and rewinding of the hose 5, imposing thereon the path to be followed and reducing for example the risk of forming tangles in the receptacle 6.

Advantageously, the handling and gathering unit 1 according to the invention comprises means for adjusting the center distance comprised between the rotating member 3 and the abutment element 4, in order to allow the handling and gathering of hoses 5 that have different diameters and shapes.

In particular, the adjustment means comprise at least one slot 10, which is formed along the frame 2: at least one between the rotating member 3 and the abutment element 4 is keyed coaxially on a respective pivot 11, which has an end which can slide in the corresponding slot 10.

If it is necessary to vary the format (diameter) of the hoses 5 to be treated, it is therefore sufficient to move the pivot 11 along the slot 10 to obtain a corresponding variation of the center distance between the rotating member 3 and the abutment element 4.

Upon use of a constructive solution that provides for a plurality of abutment elements 4 (and/or rotating members 3), it is possible to provide correspondingly the frame 2 with a plurality of slots 10 and pivots 11 in order to vary the respective center distances and allow the drawing of the hose 5 of a different diameter.

Conveniently, the unit 1 according to the invention comprises an actuation apparatus, which is capable of actuating the rotation of at least one rotating member 3.

In particular, such actuation apparatus, which is functionally associated, by means of guiding elements (belts and/or gears, for example), with the rotating member 3, is preferably chosen among an electric motor, a pneumatic motor and a manual actuation.

The manual actuation can be constituted simply by a crank which is rigidly connected for example to the pulley 8.

With particular reference to the embodiments that provide for the use of an actuation apparatus constituted by an electric motor or by a pneumatic motor, the unit 1 comprises a control and management device, which is functionally associated with the above cited apparatus, in order to control the actuation of the rotating member 3.

More particularly, the control and management device is chosen preferably among a keypad, a pedal, a selector and a radio control.

The use of the handling and gathering unit according to the invention is as follows.

Upon the need to use a hose 5 that is preliminarily arranged in the receptacle 6, it is sufficient to unwind it by turning the pulley 8 (manually or by way of the actuation apparatus).

In this manner, the pulley 8 is in fact capable of drawing by friction the hose 5 (which on the opposite side abuts against the rollers 9) and it is thus possible to move it in a practical and easy manner.

To ensure simple unwinding, therefore, thanks to the unit 1 according to the invention it is not necessary to wind preliminarily the hose around a drum, as occurs according to known practices.

Of course, after using the hose 5, it is possible to activate the rotation in the opposite direction of the pulley 8 in order to cause complete reinsertion of the hose 5 within the receptacle 6.

As is evident from what has been described, by resorting to the unit 1 according to the invention the hose 5 is never subjected to deformations and crushing (for example as a consequence of its winding around a drum, as occurs in the background art), and this allows to utilize fully its suction effectiveness.

Further, even in a condition of non-use, the hose 5 is stored in the receptacle 6 in a non-deformed configuration, and therefore if one chooses to unwind only part thereof (for example to reach a region that is proximate to the unit 1), the remaining portion, which is still accommodated in the receptacle 6, again does not compromise the correct operation of the hose 5.

The possibility to vary the center distance between the pulley 8 and the rollers 9 allows, as already noted, to vary the dimension (the cross-section but also the length) and shape of the hoses 5 to be handled, making the unit 1 in practice particularly versatile.

Moreover, it can be used effectively also for hoses 5 of the twin type, since by not requiring the use of central rotating pivots (for the connection of the hose 5 wound around a drum to the other components of the suction system), the risk of leaks due to imperfect sealing of the gaskets is eliminated and maintenance costs are reduced accordingly.

Moreover, the possibility is not excluded to use the unit 1 according to the invention to handle and gather hoses 5 that contain additional tubular elements (which are coaxial to the hose 5) if required by the specific application. For this application, in fact, the particularities of the unit 1 according to the invention, which ensure at any time that the hose 5 is kept in a non-deformed configuration, avoid the danger of damage to such tubular elements arranged inside it.

In practice it has been found that the handling and gathering unit according to the invention fully achieves the intended aim, since the presence of a rotating member that faces and is proximate to at least one abutment element, which is capable of causing by friction the sliding of an at least partially flexible hose that is interposed between them simplifies the operations for winding and unwinding the hose.

## Claims

1. A unit for handling and gathering flexible hoses, comprising a flame (2) that supports at least one rotating member (3) constituted by a pulley (8) whose lateral surface is conveniently contoured to receive the side wall of the hose (5) and that faces and is proximate to at least one abutment element (4) constituted by a roller (9) adapted to clamp the side wall of the hose (5) on the opposite side with respect to said pulley (8), the actuated rotation of said at least one rotating member (3) causing, by friction, the sliding of at least one at least partially flexible hose (5) that is interposed between said rotating member (3) and said abutment element (4), **characterized in that** it comprises at least two of said abutment elements (4) each constituted by a said roller (9), both of which are adapted to clamp, in distinct points, the side wall of the hose (5) on the opposite side with respect to said pulley (8), and a receptacle (6) for the hose (5), said at least one member (3) rotating in both directions in order to cause respectively the at least partial extraction of the hose (5) from said receptacle (6) and, vice versa, the reinsertion of the hose (5) in said receptacle (6).

2. The unit according to claim 1, **characterized in that** it comprises means for adjusting the center distance comprised between said rotating member (3) and said abutment element (4), in order to allow the handling and gathering of hoses (5) that have different diameters and shapes.

3. The unit according to claim 2, **characterized in that** said adjustment means comprise at least one slot (10) that is formed along said frame (2), at least one between said rotating member (3) and said abutment element (4) being keyed coaxially on a respective pivot (11) which has an end that can slide in said corresponding slot (10) to vary the center distance between said rotating member (3) and said abutment element (4).

4. The unit according to one or more of the preceding claims, **characterized in that** it comprises an actuation apparatus for actuating the rotation of at least one of said rotating members (3).

5. The unit according to claim 4, **characterized in that** said actuation apparatus is chosen among an electric motor, a pneumatic motor, a manual actuation system, said actuation apparatus being functionally associated, by way of guiding elements, with said at least one rotating member (3).

6. The unit according to one of the claims 4 or 5, **characterized in that** it comprises a control and management device that is functionally associated with said apparatus in order to actuate said at least one rotating member (3).

## Patentansprüche

1. Eine Einheit zur Handhabung und zum Aufspulen von Schläuchen, die einen Rahmen (2) umfasst, der mindestens ein drehbares Glied (3) trägt, bestehend aus einer Riemenscheibe (8), deren Seitenfläche praktisch konturiert ist, um die Seitenwand des Schlauchs (5) aufzunehmen, und die einem Widerlagerelement (4) zugewandt und daran angrenzend ist, bestehend aus einer Rolle (9), ausgebildet, um die Seitenwand des Schlauchs (5) auf der der Riemenscheibe (8) gegenüberliegenden Seite zu klemmen, wobei die aktivierte Drehung des mindestens einen drehbaren Glieds (3) durch Reibung das Gleiten mindestens eines zumindest teilweise biegsamen Schlauchs (5) verursacht, der zwischen dem drehbaren Glied (3) und dem Widerlagerelement (4) angeordnet ist, **dadurch gekennzeichnet, dass** sie mindestens zwei der Widerlagerelemente (4) umfasst, jeweils bestehend aus einer solchen Rolle (9), die beide ausgebildet sind, um an separaten Punkten die Seitenwand des Schlauchs (5) auf der der Riemenscheibe (8) gegenüberliegenden Seite zu klemmen, und einen Behälter (6) für den Schlauch (5), wobei das mindestens eine Glied (3) sich in beide Richtungen dreht, um das zumindest partielle Herausziehen des Schlauchs (5) aus dem Behälter (6) und umgekehrt das Wiedereinführen des Schlauchs (5) in den Behälter (6) zu verursachen.

2. Die Einheit gemäß Anspruch 1, **dadurch gekennzeichnet, dass** sie Mittel umfasst, um den Achsabstand zwischen dem drehbaren Glied (3) und dem Widerlagerelement (4) einzustellen, um die Handhabung und das Aufspulen von Schläuchen (5) mit verschiedenen Durchmessern und Formen zu ermöglichen.

3. Die Einheit gemäß Anspruch 2, **dadurch gekennzeichnet, dass** die Einstellmittel mindestens einen Schlitz (10) umfassen, der entlang dem Rahmen (2) geformt ist, wobei das drehbare Glied (3) und das Widerlagerelement (4) koaxial auf einem entsprechenden Drehzapfen (11) verkeilt sind, der ein Ende hat, das in dem entsprechenden Schlitz (10) gleiten kann, um den Achsabstand zwischen dem drehbaren Glied (3) und dem Widerlagerelement (4) zu variieren.

4. Die Einheit gemäß einem oder mehreren der obigen Ansprüche, **dadurch gekennzeichnet, dass** sie eine Aktivierungsvorrichtung zur Aktivierung der Drehung mindestens eines der drehbaren Glieder (3) umfasst.

5. Die Einheit gemäß Anspruch 4, **dadurch gekennzeichnet, dass** die Aktivierungsvorrichtung gewählt ist aus einem Elektromotor, einem Druckluftmotor, einem manuellen Aktivierungssystem, wobei die Aktivierungsvorrichtung über Führungselemente funktionell mit dem mindestens einen drehbaren Glied (3) verbunden ist.

6. Die Einheit gemäß einem der Ansprüche 4 oder 5, **dadurch gekennzeichnet, dass** sie eine Steuer- und Verwaltungsvorrichtung umfasst, die zur Aktivierung des mindestens einen drehbaren Gliedes (3) funktionell mit der Vorrichtung verbunden ist.

## Revendications

1. Unité pour manipuler et collecter des tuyaux flexibles, comprenant un bâti (2) qui supporte au moins un élément rotatif (3) constitué par une poulie (8) dont la surface latérale est convenablement profilée pour recevoir la paroi latérale du tuyau (5) et qui fait face et est à proximité d'au moins un élément de butée (4) constitué pour un rouleau (9) adapté pour serrer la paroi latérale du tuyau (5) sur le côté opposé par rapport à ladite poulie (8), la rotation actionnée dudit au moins un élément rotatif (3) provoquant, par friction, le coulissement d'au moins un tuyau au moins partiellement flexible (5) qui est intercalé entre ledit élément rotatif (3) et ledit élément de butée (4), **caractérisée en ce qu'**elle comprend au moins deux des dits éléments de butée (4), chacun constitué par un dit tuyau (9), dont les deux sont adaptés pour serrer, dans des points distincts, la paroi latérale du tuyau (5) sur le côté opposé par rapport à ladite poulie (8), et un réceptacle (6) pour le tuyau (5), ledit au moins un élément (3) tournant dans les deux directions afin de provoquer respectivement l'extraction au moins partielle du tuyau (5) dudit réceptacle (6) et vice versa, la réinsertion du tuyau (5) dans ledit réceptacle (6).

2. Unité selon la revendication 1, **caractérisée en ce qu'**elle comprend des moyens pour ajuster la distance centrale comprise entre ledit élément rotatif (3) et ledit élément de butée (4), afin de permettre la manipulation et la collecte des tuyaux (5) qui ont des diamètres et des formes différentes.

3. Unité selon la revendication 2, **caractérisée en ce que** lesdits moyens d'ajustement comprennent au moins une fente (10) qui est formée le long dudit bâti (2), au moins un entre ledit élément rotatif (3) et ledit élément de butée (4) étant claveté de manière coaxiale sur un pivot (11) respectif qui a une extrémité qui peut coulisser dans ladite fente (10) correspondante afin de modifier la distance centrale entre ledit élément rotatif (3) et ledit élément de butée (4).

4. Unité selon une ou plusieurs des revendications précédentes, **caractérisée en ce qu'**elle comprend un appareil d'actionnement pour actionner la rotation d'au moins l'un desdits éléments rotatifs (3).

5. Unité selon la revendication 4, **caractérisée en ce que** ledit appareil d'actionnement est choisi parmi un moteur électrique, un moteur pneumatique, un système d'actionnement manuel, ledit appareil d'actionnement étant fonctionnellement associé, au moyen d'éléments de guidage, avec ledit au moins un élément rotatif (3).

6. Unité selon l'une des revendications 4 ou 5, **caractérisée en ce qu'**elle comprend un dispositif de commande et de gestion qui est fonctionnellement associé avec ledit appareil afin d'actionner ledit au moins un élément rotatif (3).
